Europäisches Patentamt

European Patent Office

Office européen des brevets

(19)

(11) Veröffentlichungsnummer: **0 341 427**
**A2**

(12) ## EUROPÄISCHE PATENTANMELDUNG

(21) Anmeldenummer: **89106144.2**

(22) Anmeldetag: **07.04.89**

(51) Int. Cl.⁴: **G02B 6/22**

(30) Priorität: **12.04.88 DE 3812140**

(43) Veröffentlichungstag der Anmeldung:
**15.11.89 Patentblatt 89/46**

(84) Benannte Vertragsstaaten:
**AT BE CH DE ES FR GB GR IT LI LU NL SE**

(71) Anmelder: **Schott Glaswerke**
**Hattenbergstrasse 10**
**D-6500 Mainz(DE)**

(84) **BE CH DE ES FR GR IT LI LU NL SE AT**

Anmelder: **Carl-Zeiss-Stiftung trading as**

**SCHOTT GLASWERKE**
**Hattenbergstrasse 10**
**D-6500 Mainz 1(DE)**

(84) **GB**

(72) Erfinder: **Fotheringham, Ulrich**
**Herschelstrasse 16**
**D-6200 Wiesbaden(DE)**

(74) Vertreter: **Görtz, Dr. Fuchs, Dr. Luderschmidt**
**Patentanwälte**
**Abraham-Lincoln-Strasse 7 Postfach 46 60**
**D-6200 Wiesbaden(DE)**

(54) **Monomode-Lichtleitfaser und Verfahren zu deren Herstellung.**

(57) Um eine aus dotierten Schichten aufgebaute Monomode-Lichtleitfaser zu schafffen, die für gewünschte Eigenschaften mit möglichst wenig Dotiermaterial auskommt, ist das Brechzahlprofil n (r) zumindest für die chromatische Dispersion und/oder des Felddurchmessers und/oder der Dämpfung und/oder des Obermodencutoffs als gewünschte Eigenschaften eingestellt. Die Anzahl m der Schichten der Dicke r ist groß gegen die Anzahl gewünschten Eigenschaften und jede Schicht enthält gerade soviel Dotiermaterial, das die dazugehörigen Brechzahlen zumindest annähernd die Bedingung und

$$\sum_{i=1}^{m} |n(r_i) - n_0| \cdot r_i \cdot \Delta r = \text{Minimum}$$

erfüllen, wobei $n_0$ die Brechzahl des Matrixmaterials ist, aus der die Lichtleitfaser überwiegend besteht, und $r_i - i \cdot \Delta r$ bedeutet. Die Anzahl der Schichten beträg mehr als 100, vorzugsweise 300-500. Die Monomode-Lichtleitfaser weist ein Brechzahlprofil auf, das eine Kernzone (1) verhältnismäßig hoher Brechzahl und nach außen daran anschließend ein stark ausgeprägtes erstes Maximum (4), ein schwaches zweites Minimum (5) und einen auf dem Niveau undotierten Matrixmaterials liegenden Auslaufbereich (6) aufweist, wobei an dem Außenrand der Kernzone (1) ein zweites Maximum (7) vorliegt, das entsprechend einer gewünschten Anhebung der chromatischen Dispersion bei 1.300 nm auf Null bemessen ist, und daß zwischen dem ersten Maximum (4) und dem zweiten Minimum (5) mehrere Wendepunkte (8, 9, 10) vorliegen.

EP 0 341 427 A2

Chromatische Dispersion der Faser

FIG.1

## Monomode-Lichtleitfaser und Verfahren zu deren Herstellung

Die Erfindung betrifft eine Monomode-Lichtleitfaser mit einem Brechzahlprofil n (r), wobei n die Brechzahl des Fasermaterials im Abstand r von der Achse der Faser bedeutet, wobei das Brechzahlprofil durch Dotieren eines Matrixmaterials, aus dem die Faser überwiegend besteht, mit wenigstens einem Dotiermaterial unter Ausbildung einer Anzahl von Schichten mit unterschiedlicher Brechzahl eingestellt ist. Die Erfindung betrifft auch ein Verfahren zu seiner Herstellung.

Aus der DE-OS 32 32 194 ist eine Monomodefaser mit einem Brechzahlprofil bekannt, das derart ausgelegt ist, daß die Faser hinsichtlich der chromatischen Dispersion insbesondere drei Bedingungen erfüllt: dies sind Nullstellen bei zwei vorgewählten Wellenlängen und ein vorgegebener Maximalwert. Das Brechzahlprofil ist aus drei Schichten aufgebaut und zeigt einen W-förmigen Verlauf. Es ist bezüglich der Dotiermaterialmenge nicht optimiert.

Aufgabe der Erfindung ist es, eine Monomode-Lichtleitfaser zu schaffen, die für vorgegebene Eigenschaften mit möglichst wenig Dotiermaterial auskommt. Aufgabe der Erfindung ist es auch, ein Verfahren zur Herstellung einer solchen Lichtleitfaser bereitzustellen.

Diese Aufgabe wird durch die kennzeichnenden Merkmale von Anspruch 1 und Anspruch 16 gelöst. Vorteilhafte Ausführungsformen sind Gegenstand der Unteransprüche.

Die erfindungsgemäße Monomode-Lichtleitfaser ist dadurch gekennzeichnet, daß das Brechzahlprofil n (r) zumindest für vorgegebene Werte der chromatischen Dispersion und/oder des Felddurchmessers und/oder der Dämpfung und/oder des Obermodencutoffs als gewünschte Eigenschaften eingestellt ist, die Anzahl m der Schichten der Dicke $\Delta$ r deutlich größer ist als die Anzahl gewünschter Eigenschaften und jede Schicht gerade soviel Dotiermaterial enthält, daß die dazugehörigen Brechzahlen unter Beibehaltung der gewünschten Eigenschaften wenigstens annähernd die Bedingung

$$\sum_{i=1}^{m} |n(r_i) - n_0| \cdot r_i \cdot \Delta r = Minimum \qquad (1)$$

erfüllen, wobei $n_0$ die Brechzahl des Matrixmaterials und $r_i = i \cdot \Delta$ r bedeuten.

Die Erfüllung der erfindungsgemäßen Bedingung bedeutet eine Minimierung der Menge des Dotiermaterials und damit eine entsprechende Verringerung des Herstellungsaufwandes, da bei üblichen Konzentrationen von Dotiermaterial der sich ergebende Brechzahlunterschied zum nicht dotierten Material im wesentlichen proportional zur Konzentration des Dotiermaterials ist. Dies gilt bei üblichen Dotiermaterialien wenigstens näherungsweise auch dann, wenn mehrere verschiedene Dotiermaterialien vorliegen, insbesondere ein die Brechzahl erhöhendes und ein die Brechzahl erniedrigendes Dotiermaterial. Unter diesen Umständen entspricht die Erfüllung der erfindungsgemäßen Bedingung besonders gut einer Minimierung der Menge des Dotiermaterials, wenn die brechzahlverändernden Wirkungen der beiden Dotiermaterialien im wesentlichen entgegengesetzt gleich sind. Dies ist insbesondere der Fall bei den häufig verwendeten Dotiermaterialien Fluor (zur Brechzahlabsenkung) und Germanium (zur Brechzahlerhöhung). Der Proportionalitätsfaktor zwischen Brechzahländerung und eingebrachter Teilchenzahl pro Mol Matrixmaterial stimmt für Fluor und Germanium fast überein.

Bei modernen Herstellungsverfahren wird die Faser unter schichtweiser Veränderung der Brechzahl aufgebaut. Die Erfüllung der erfindungsgemäßen Forderungen ist auch bei einer größeren Anzahl von gewünschten Eigenschaften ohne unnötig große Brechzahlsprünge und ohne übermäßige Abweichung von der Brechzahl des Matrixmaterials dadurch möglich, daß die Anzahl der Schichten groß gegen die Anzahl der gewünschten Eigenschaften gewählt wird. Dies ist zum Beispiel möglich bei den bekannten Plasma-Herstellungsverfahren, bei denen die Anzahl der möglichen Schichten und damit die Anzahl der für die Auslegung der erfindungsgemäßen Faser zur Verfügung stehenden Freiheitsgrade auf etwa 1.000 (PCVD-Verfahren) oder sogar 1.000.000 (PICVD-Verfahren) gestiegen ist. Andererseits wird man, um die Errechnung des benötigten Brechzahlprofils nicht zu sehr zu erschweren, die Anzahl der in die Rechnung eingehenden Schichten nicht zu groß wählen. Im allgemeinen genügt es, wenn bei der Herstellung mehr als 100 Schichten gewählt werden, vorzugsweise etwa 300 bis 500 Schichten.

Als gewünschte Eigenschaften der Lichtleitfaser kommen insbesondere folgende Eigenschaften in Frage:

a) Die chromatische Dispersion hat Nullstellen etwa bei den Lichtwellenlängen 1.300 und 1.550 nm (dies sind bevorzugte Betriebswellenlängen, weil dort bei üblichen CVD-Glasmaterialien Absorptionsminima vorliegen) und in der Mitte dazwischen ein Maximum von 3 ps/(nm·km). Dies bedeutet einen abgeflachten Verlauf der Dispersion, wie er internationalen Empfehlungen entspricht.

b) Die Dämpfung des als ersten Obermode angenommenen $LP_{11}$-Modes bei 1.250 nm beträgt wenigstens 1 dB/m. Dies ist zweckmäßig, um die Faser von dieser Wellenlänge an effektiv monomodig betreiben zu können.

c) Die Dämpfung des Grundmodes bei 1.600 nm beträgt höchstens $10^{-6}$ dB/km. Dies läßt noch genügend Spielraum für Dämpfungserhöhungen durch Faserkrümmungen.

d) Der Felddurchmesser bei 1.300 nm ist möglichst groß und beträgt z.B. 6,8 μm. Dies erleichtert das Spleißen.

e) Die Brechzahl soll einen vorgegebenen Minimalwert nicht unterschreiten.

Die erfindungsgemäße Faser stellt eine Vielschichtfaser dar, die längs des Radius eine charakteristische Folge fast dreieckiger Hebungen und Senkungen des Brechzahlniveaus mit dazwischenliegenden flachen Zonen aufweist, wobei sich bekannte Grobstrukturen, nämlich ein auf einen Kern relativ hoher Brechzahl folgendes erstes, stark ausgeprägtes Brechzahlminimum, ein darauf folgendes ausgeprägtes erstes Brechzahlmaximum, ein schwaches zweites Minimum und ein Auslaufbereich wiederfinden (EP-OS 0 224 282). Erfindungsgemäß liegt an dem Außenrand des Kerns ein zweites Maximum vor, das es ermöglicht, die chromatische Dispersion bei etwa 1.300 nm, die bei bekannten Fasern einen unerwünscht hohen negativen Wert hat, zu erhöhen, vorzugsweise auf Null. Ferner liegen zwischen dem ersten Maximum und dem zweiten Minimum mehrere Wendepunkte vor. Dadurch kann der Abfall der Brechzahl von dem ersten Maxmimum in das zweite Minimum wirtschaftlich gestaltet werden. Dies gilt besonders dann, wenn zwischen dem ersten Maximum und dem zweiten Minimum eine Stufe auf dem Niveau undotierten Matrixmaterials, vorzugsweise $SiO_2$, vorliegt.

Es ist ferner zweckmäßig, wenn in dem Auslaufbereich, in dem die Brechzahl vorzugsweise auf dem Niveau undotierten Matrixmaterials liegt, ein drittes Maximum vorgesehen ist. Dies bewirkt eine Erhöhung der Tunnelwahrscheinlichkeit für die $LP_{11}$-Photonen aus dem Kern in das weiter außen liegende Material und damit eine günstige Beeinflussung des Obermodencutoffs, d.h. eine Erhöhung der Obermodendämpfung. Dieses dritte Maximum liegt so weit außen, daß es den Grundmode bezüglich Dämpfung und Dispersion nicht mehr stört.

Brechzahlprofile für die erfindungsgemäßen Fasern können mit geringem Aufwand rechnerisch bestimmt werden. Im folgenden soll eine besonders einfache Möglichkeit einer solchen rechnerischen Bestimmung näher im einzelnen erläutert werden.

Für einen gegebenen Satz von 1 gewünschten Eigenschaften, z.B. hinsichtlich Dispersion, Dämpfung, Felddurchmesser und Obermodencutoff, lautet die erfindungsgemäße Bedingung mathematisch formuliert: Man sucht ein Minimum der Funktion

$$\sum_{i=1}^{m} |n(r_i) - n_0| \cdot r_i \cdot \Delta r \quad ; \quad r_i = i \cdot \Delta r \qquad (1)$$

wobei die 1 gewünschten Eigenschaften als Nebenbedingungen den zulässigen Bereich im $R^m$, dem Raum der Brechzahlen $n(r_i) - n_0$, definieren, d.h. man kann auf diese Weise mit einem quasi-kontinuierlichen Profil, z.B. einigen hundert äquidistanten Schichten arbeiten. Diese Summe stellt mathematisch gesehen eine Approximation des folgenden Integrals dar:

$$\int_0^{R_2} |n(r) - n_0| \, r \, dr \qquad (2)$$

wobei $R_2$ den Radius der Faser bedeutet.

Als Beispiel seien folgende typische Eigenschaften für eine Faser mit einem Durchmesser von $2 \cdot R_2$ = 125 μm Durchmesser angenommen:

Für die chromatische Dispersion sollen Nullstellen bei 1.300 und 1.550 nm liegen; dazwischen soll in der Mitte ein Maximum von 3 ps/(nm·km) liegen. Die Dämpfung des als ersten Obermode angenommenen $LP_{11}$-Modes bei 1.250 nm soll 1 dB/m sein, um die Faser von dieser Wellenlänge an effektiv monomodig betreiben zu können. Für den Grundmode ($LP_{01}$) soll bei 1.600 nm eine Dämpfung von $10^{-6}$ dB/km vorliegen; dies läßt noch genügend Spielraum für Dämpfungserhöhungen durch Faserkrümmungen. Der gewünschte Felddurchmesser soll 6,8 μm bei 1.300 nm betragen.

Die Berechnung der zugehörigen Faser mit dem erfindungsgemäßen Brechzahlprofil erfolgt in zwei Schritten. Zunächst wird, ausgehend von einem leicht abgerundeten Stufenindex-Profil, mit einem Verfahren vom Newton-Typ ein Element des zulässigen Bereiches aufgesucht, d.h. ein Brechzahlprofil, mit dem sich bis auf die Minimierungsbedingung die gewünschten Eigenschaften ergeben. Anschließend gelangt man mit der Methode des projizierten Gradienten in das Minimum.

Die in der obigen Formel (1) angegebene Summennorm ist konvex über dem $R^m$. Daher ist ein lokales Minimum unter "gutartigen" Nebenbedingungen zugleich ein globales Minimum (konvexe Optimierung). Das Vorliegen konvexer Optimierung zeigt sich daran, daß, wenn man anders strukturierte Startprofile zugrundelegt, das erwähnte Minimum davon unberührt bleibt.

Im folgenden wird das Verfahren vom Newton-Typ erläutert.

Da man eine Lösung im Bereich der schwach führenden Fasern erwarten darf, wird nachfolgend mit der skalaren Wellengleichung und linear polarisierten Moden gerechnet.

Man geht, wie gesagt, von einem einfachen Stufenindexprofil für Kern und Mantel aus; der Mantel möge dabei aus reinem Quarzglas ($SiO_2$) bestehen. Dieses Brechzahlprofil wird wie andere durch den aus den Brechzahlen der einzelnen Schichten gebildeten Vektor $\vec{n}$ beschrieben. Entsprechend dem Newton-Verfahren linearisiert man lokal die 1 (im allgemeinen nichtlinearen) Nebenbedingungen

$$c_j(\vec{n_2}) \approx c_j(\vec{n_1}) + \nabla_{\vec{n}}\, c_j \cdot (\vec{n_2} - \vec{n_1}) \qquad (3)$$

$$j = 1, \ldots, \ell$$

Wertet man die Nebenbedingungen an der Stelle $n_1$ aus, so erhält man den Residuenvektor mit den Komponenten $b_j = c_j(\vec{n_1}) - c_{jo}$    (4)

$c_{jo}$: Sollwert der gewünschten Eigenschaft.

Man führt weiter eine Matrix M ein, die in ihren Zeilen die Gradienten der Nebenbedingungen enthält, und formuliert damit die Forderung an den Vektor

$$\Delta \vec{n} = \vec{n_2} - \vec{n_1}:$$

$$M \cdot \Delta \vec{n} = -\vec{b} \qquad (5)$$

Gleichzeitig verlangt man, daß $\Delta \vec{n}$ bezüglich der $L_2$-Norm minimal sein soll. Daher gilt mit $\vec{\alpha}$ als dem die Lagrange-Multiplikatoren enthaltenden Vektor:

$2 \cdot \Delta \vec{n} + M^T \vec{\alpha} = 0$    (6)

Multiplikation dieser Gleichung mit M und das Einsetzen führt auf $\vec{\alpha} = (MM^T)^{-1}\, 2\, \vec{b}$    (7)

was mittels dses Householderverfahrens berechnet wird. Man erhält damit $\Delta \vec{n} = -M^T(MM^T)^{-1}\, \vec{b}$    (8)

Im allgemeinen erreicht man den zulässigen Bereich nach wenigen Iterationsschritten dieser Art.

Für dieses Verfahren vom Newton-Typ sind Berechnungen physikalischer Eigenschaften aus dem Brechzahlprofil erforderlich, des weiteren die Berechnungen der Ableitungen der diese Eigenschaften verkörpernden mathematischen Funktionen nach den Brechzahlen der einzelnen Schichten.

1.) Die chromatische Dispersion wird durch numerische Differentiation der Gruppenlaufzeit berechnet, wobei Modenfeld und -ausbreitungskonstante numerisch bestimmt werden, z.B. nach U.Fotheringham, D.Krause, R.Kunstmann, "Calculations to Determine the Effective Cutoff Wavelength of Single-Mode Fibers", JOpt.Commun.8, 4, pp.143-147, 1987, und A.W.Snyder, J.d.Love, "Optical Waveguide Theory", London. New York: Chapman and Hall, 1983".

Bei der Berechnung des Gradienten der chromatischen Dispersion geht man von der Störungskorrektur erster Ordnung, die sich für die longitudinale Ausbreitungskonstante $\beta$ im Falle des Übergangs $\vec{n} \to \vec{n} +$ $\Delta \vec{n}$ ergibt, aus. In Integralschreibweise erhält man:

$$\Delta \beta = k \cdot \int_0^{R_2} E^2(r, \lambda) \cdot \Delta n(r) \cdot r \, dr \qquad (9)$$

E(r): Feldfunktion, $\lambda$ : Wellenlänge, $K = \dfrac{2\pi}{\lambda}$
Für die chromatische Dispersion gilt:

$$C(\lambda) = \frac{\partial}{\partial \lambda} \frac{-\lambda^2}{2\pi c} \frac{\partial}{\partial \lambda} \beta(\lambda) \qquad (10)$$

Das heißt mit dem Satz von Schwarz:

$$\Delta C(\lambda) = -\frac{\lambda}{c} \int_0^{R_2} \left[ \left( \frac{\partial E}{\partial \lambda}(r, \lambda) \right)^2 + E(r, \lambda) \cdot \frac{\partial^2 E}{\partial \lambda^2}(r, \lambda) \right] \Delta n(r) \cdot r \, dr \qquad (11)$$

Die Brechzahlprofiländerung $\Delta n(r)$ wird dabei als wellenlängenunabhängig angenommen, nicht jedoch das Ausgangsbrechzahlprofil, das für jede Wellenlänge neu aus dem Konzentrationsprofil der Dotiermaterialien berechnet wird. Dieses Konzentrationsprofil wird seinerseits bei jedem Interationsschritt neu errechnet. Es ergibt sich also für den Gradienten:

$$\frac{\partial c(\lambda)}{\partial n_k} = -\frac{\lambda}{c} \left[ \left( \frac{\partial E}{\partial \lambda}(r_k, \lambda) \right)^2 + E(r_k, \lambda) \frac{\partial^2 E}{\partial \lambda^2}(r_k, \lambda) \right] \cdot r_k \cdot \Delta r \qquad (12)$$

wobei $n(r_k)$ mit $n_k$ bezeichnet worden ist.

2.) Die Dämpfung des $LP_{01}$- und des $LP_{11}$-Modes wird nach der schon genannten Arbeit von Fotheringham et al berechnet. Dort wird der Verlust pro Länge mit

$$\frac{k_{r, \inf}}{2\beta(R_1 - R_0)} \frac{E^2(R_2) \cdot R_2}{E^2(R_1) \cdot R_1} \qquad (13)$$

angegeben, wobei hier das dort nach der WKB-Methode (vgl. z.B. H.-G.Unger, "Optische Nachrichtentechnik", Teil I, Heidelberg (1984) 92) berechnete Verhältnis des mit dem Radius gewichteten Feldamplituden-Quadrates am Faserradius $R_2$ zu demjenigen am effektiven Kernradius $R_1$ aus der numerischen Feldberechnung bezogen wird. Mit $R_0$ wird die innere Kaustik bezeichnet. $k_{r,inf}$ steht für die Radialkomponente der Wellenzahl in dem die Faser umgebenden Medium.

Die wesentliche spektrale Abhängigkeit dieses Dämpfungsausdruckes ist im Verhältnis der Amplitudenquadrate enthalten. Bei der Bildung des Gradienten werden daher $R_0$ und $R_1$ sowie $\beta$ als in guter Näherung konstant angesehen, so daß nur die Ableitungen des Feldes an der Stelle $R_1$ nach den einzelnen Brechzahlen benötigt werden. Um diese zu erlangen, wird die skalare Wellengleichung differenziert und damit eine inhomogene Differentialgleichung für die gesuchte Ableitung der Feldfunktion erhalten:

$$\frac{\partial}{\partial n_k} \left( \frac{\partial^2}{\partial r^2} + \frac{1}{r} \frac{\partial}{\partial r} - \frac{\nu^2}{r^2} + n^2(r) k^2 - \beta^2 \right) E = 0$$

$$\Rightarrow \left( \frac{\partial^2}{\partial r^2} + \frac{1}{r} \frac{\partial}{\partial r} + n^2(r) k^2 - \beta^2 - \frac{\nu^2}{r^2} \right) \frac{\partial E}{\partial n_k} \bigg|_{r=r_2}$$

$$+ \left( 2 n(r_2) \delta_{\varrho k} - 2\beta \frac{\partial \beta}{\partial n_k} \right) E \bigg|_{r=r_2} = 0$$

$$\nu = 0 \qquad \text{für} \quad LP_{01}$$

$$\nu = 1 \qquad \text{für} \quad LP_{11}$$

$$(14)$$

Alle auftretenden Differentialquotienten sind dabei als Differenzenquotienten zu verstehen. Zur Lösung verwendet man die Methode der Variation der Konstanten, da man so durch Ausnutzung von Rechenvorteilen alle m Ableitungsfunktionen mit einem Schritt erhalten kann.

Die Dämpfungsberechnungen dienen der Festlegung der Grundmodendämpfung (s. oben c)) und der Festlegung der Obermodendämpfung (Obermodencutoff, s. oben b)).

3.) Für den Modenfelddurchmesser $w_0$ wird hier die $1/e$-Definition verwendet, d.h., es gilt $E(w_0)/E(0) = 1/e$. Durch eine Veränderung der Brechzahl $n_k$ geht $w_0$ über in $w_0 + \Delta w_0$, und es gilt in erster Näherung:

$$\frac{E(w_0) + \frac{\partial E}{\partial r}\bigg|_{w_0} \Delta w_0 + \frac{\partial E}{\partial n_k}\bigg|_{w_0} \Delta n_k}{E(0) + \frac{\partial E}{\partial n_k}\bigg|_{0} \Delta n_k} = \frac{1}{e}, \qquad (15)$$

woraus man berechnet:

$$\frac{\partial w_0}{\partial n_k} = \frac{\frac{E(w_0)}{E(0)} \frac{\partial E}{\partial n_k}\bigg|_{0} - \frac{\partial E}{\partial n_k}\bigg|_{w_0}}{\frac{\partial E}{\partial r}\bigg|_{w_0}} \qquad (16)$$

Im folgenden wird jetzt die Minimumsuche mit der Methode des projizierten Gradienten beschrieben: Da die zu minimierende Funktion in der vorliegenden Form

$$\sum_i |n(r_i) - n_0| \cdot r_i \cdot \Delta r \qquad (17)$$

für $n(r_i) = n_0$ nicht partiell nach $n(r_i)$ differenzierbar ist, modifiziert man sie wie folgt:

$$\sum_i |n(r_i) - n_0| \cdot r_i \cdot \Delta r \; \Theta(y_i^2 - 1) + \left(\frac{y_i^2}{2} + \frac{1}{2}\right) n_x \Theta(1 - y_i^2) \qquad (18)$$

$$y_i = (n(r_i) - n_0)/n_x$$

$n_x$ stellt eine willkürliche "kleine" Brechzahlschranke dar (etwa $n_x = 0{,}0001$). Die so definierte Funktion ist auf dem ganzen $R^m$ stetig und differenzierbar.

Man geht sodann nach einer Art Prädiktor/Korrektor-Verfahren vor, indem man längs der Richtung des negativen projizierten Gradienten

$$-(I - M^T(MM^T)^{-1}M)\,\vec{g}$$

$$\vec{g} : \text{Gradient} \qquad I : \text{Identität}$$

ein Minimum der modifizierten Summennorm sucht (hierfür verwendet man den Algorithmus des "Goldenen Schnittes") und einen Schritt zurück in den zulässigen Bereich anschließt. Das Verfahren wird abgebrochen, wenn die $L_2$-Norm des projizierten Gradienten sehr viel kleiner als die des nicht-projizierten Gradienten geworden ist (d.h. kleiner als eine entsprechende willkürliche Grenze, etwa 0,1).

Im folgenden wird der Gang des Verfahrens anhand der beigefügten Figuren erläutert.

Fig. 1 zeigt gewünschte Werte (markiert (s.a)) der chromatischen Dispersion der Faser bei verschiedenen Wellenlängen sowie einen damit übereinstimmenden gewünschten Verlauf der Dispersionskurve, der auch tatsächlich erzielt wird.

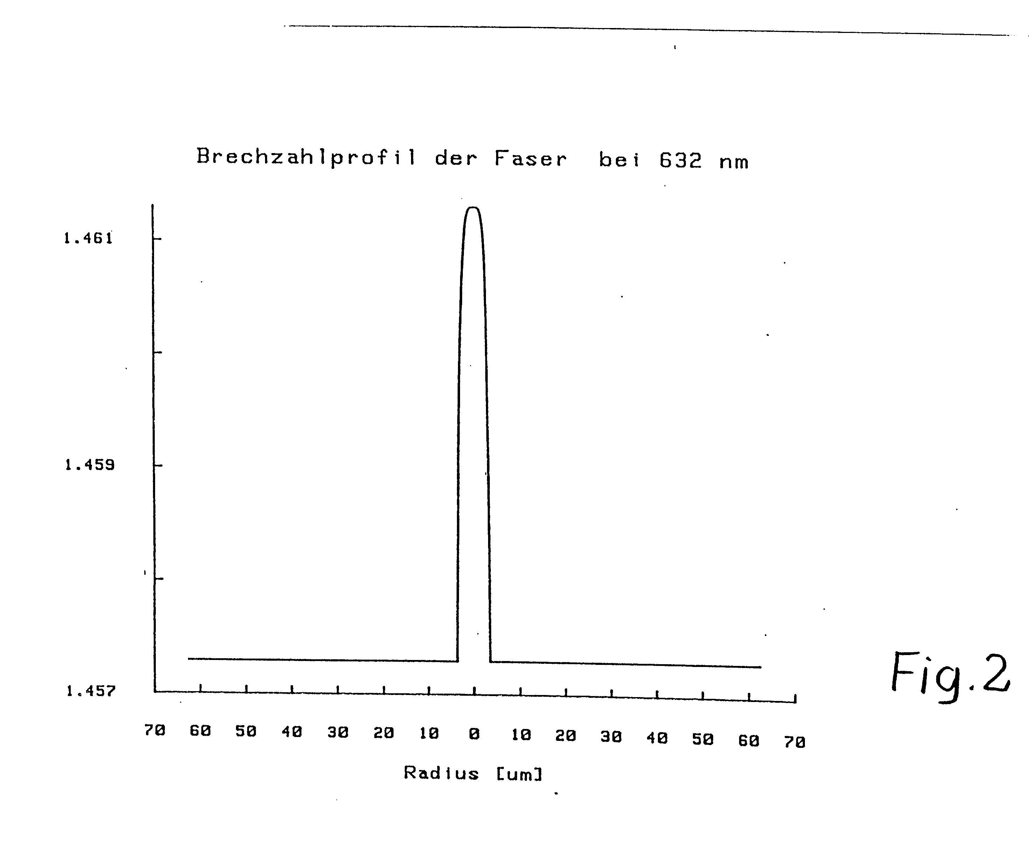

Fig. 2 zeigt das der Rechnung zugrundegelegte Startprofil.

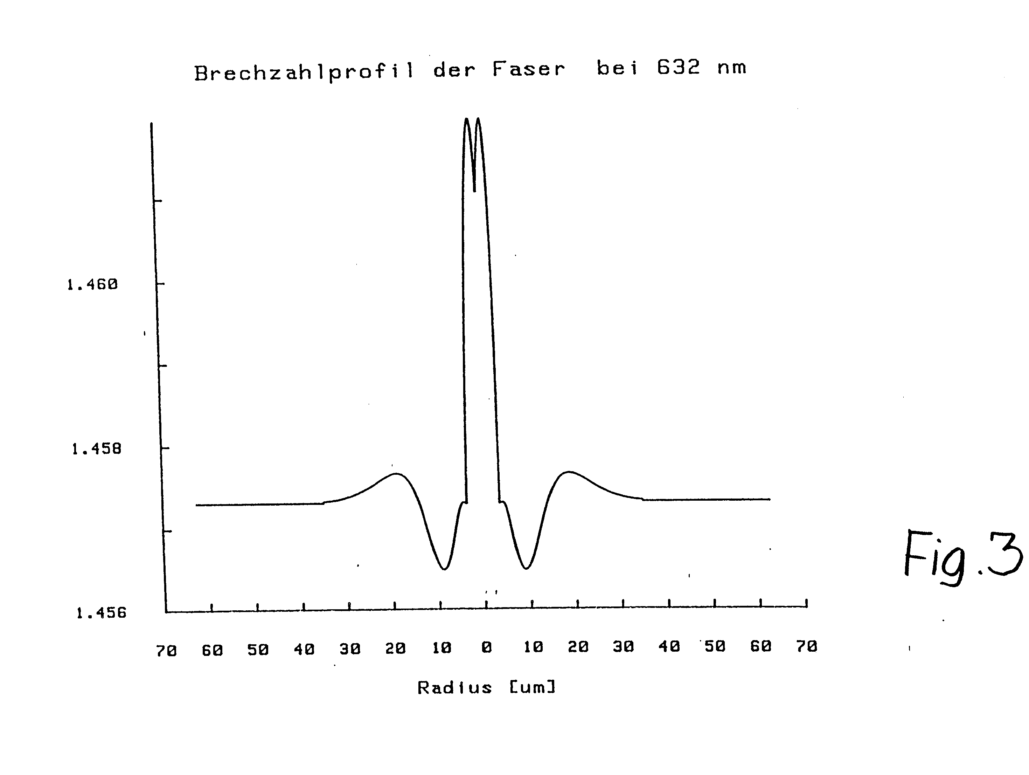

Fig. 3 zeigt das sich nach dem ersten Schritt der Rechnung in Richtung auf den zulässigen Brechzahlbereich (den Bereich derjenigen Brechzahlen, mit denen die gewünschten Eigenschaften erzielt werden können) ergebende Brechzahlprofil.

Fig. 4 zeigt das nach weiteren Rechenschritten erhaltene erste Brechzahlprofil, das in dem zulässigen Brechzahlbereich liegt.

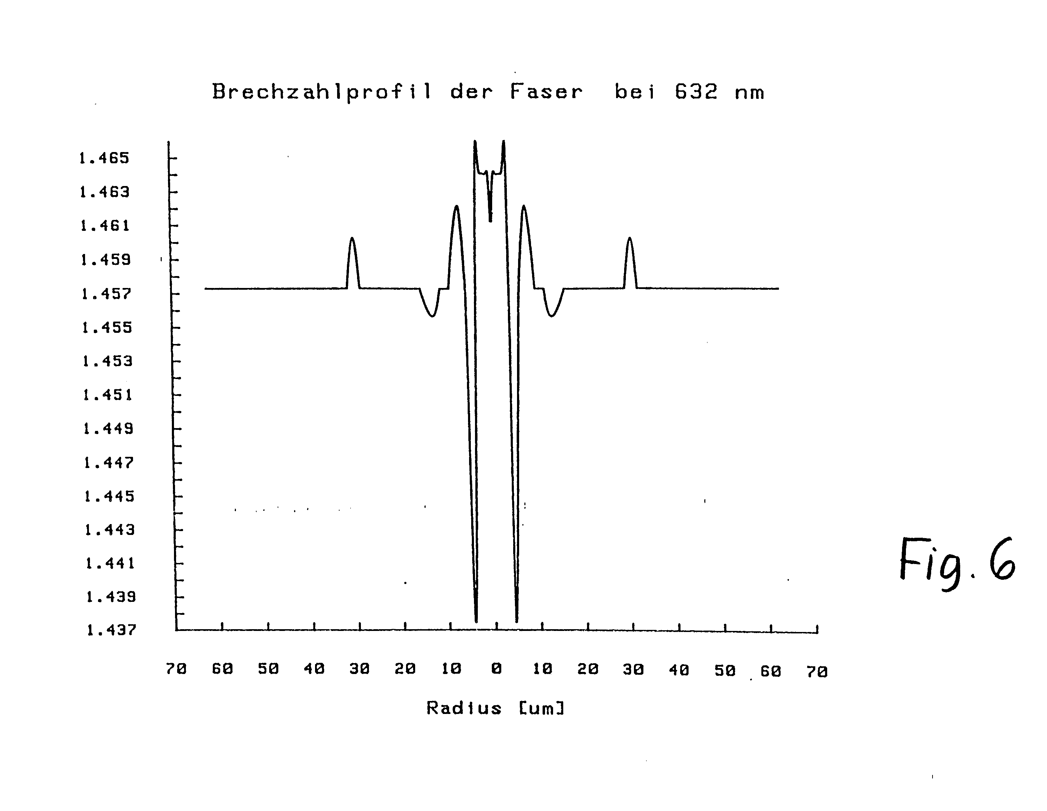

Fig. 5 und 6 zeigen Brechzahlprofilenach einigen (z.B. 5) bzw. vielen (z.B. 15) Näherungsschritten längs des projizierten Gradienten in Richtung auf das Minimum.

Fig. 7 zeigt das endgültig errechnete Brechzahlprofil.

Fig. 8 zeigt ein weiter modifiziertes Brechzahlprofil.

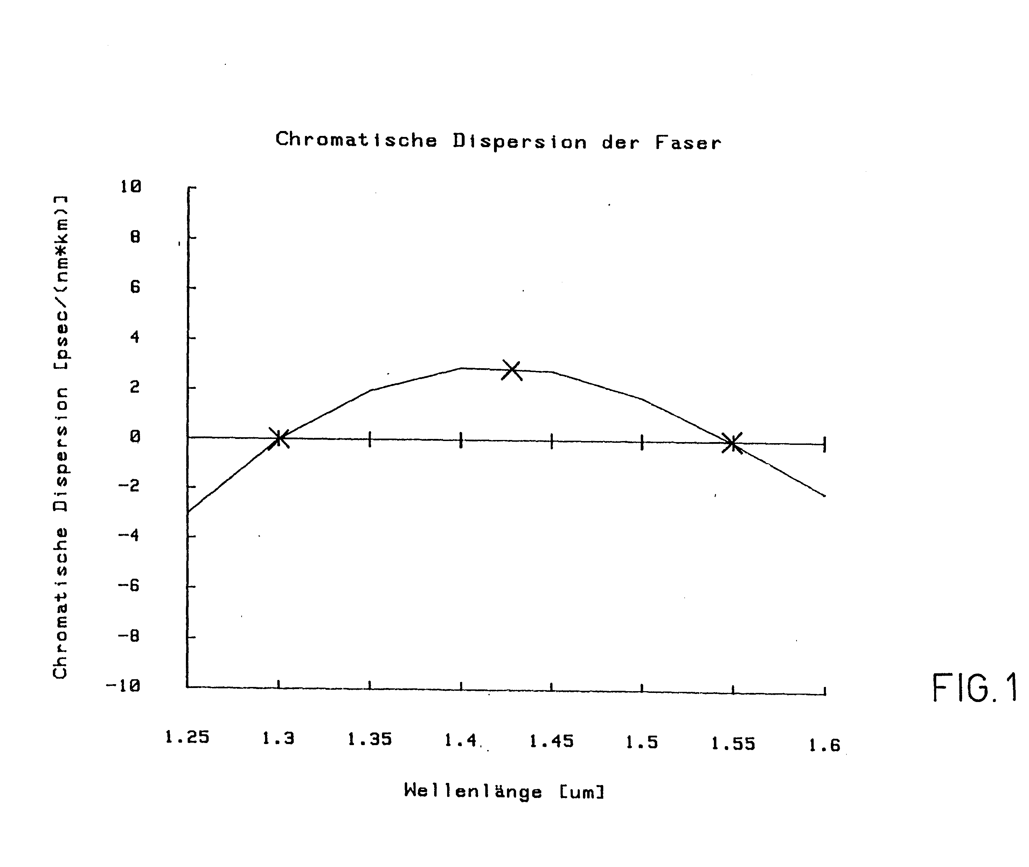

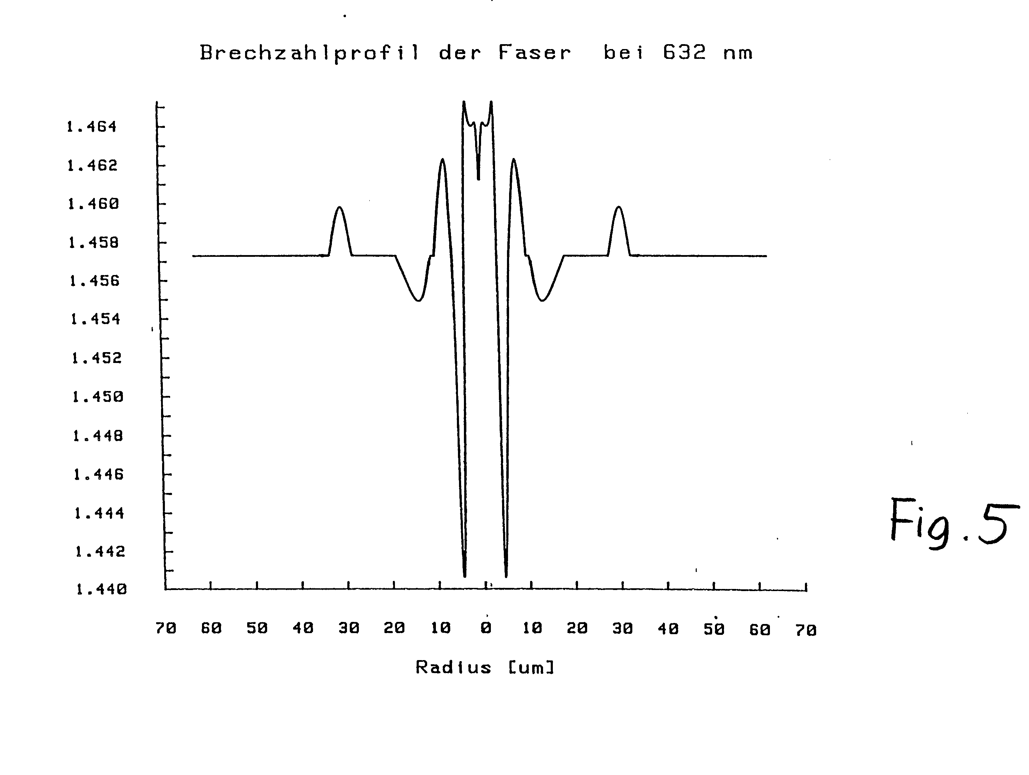

Die in Fig. 1 dargestellte Kurve bezieht sich auf das Profil aus Abb. 5. Es sei darauf hingewiesen, daß die Brechzahlen in 1/10 $\mu$m-Abständen vom Radius Null bis zum Radius 35 $\mu$m variiert wurden.

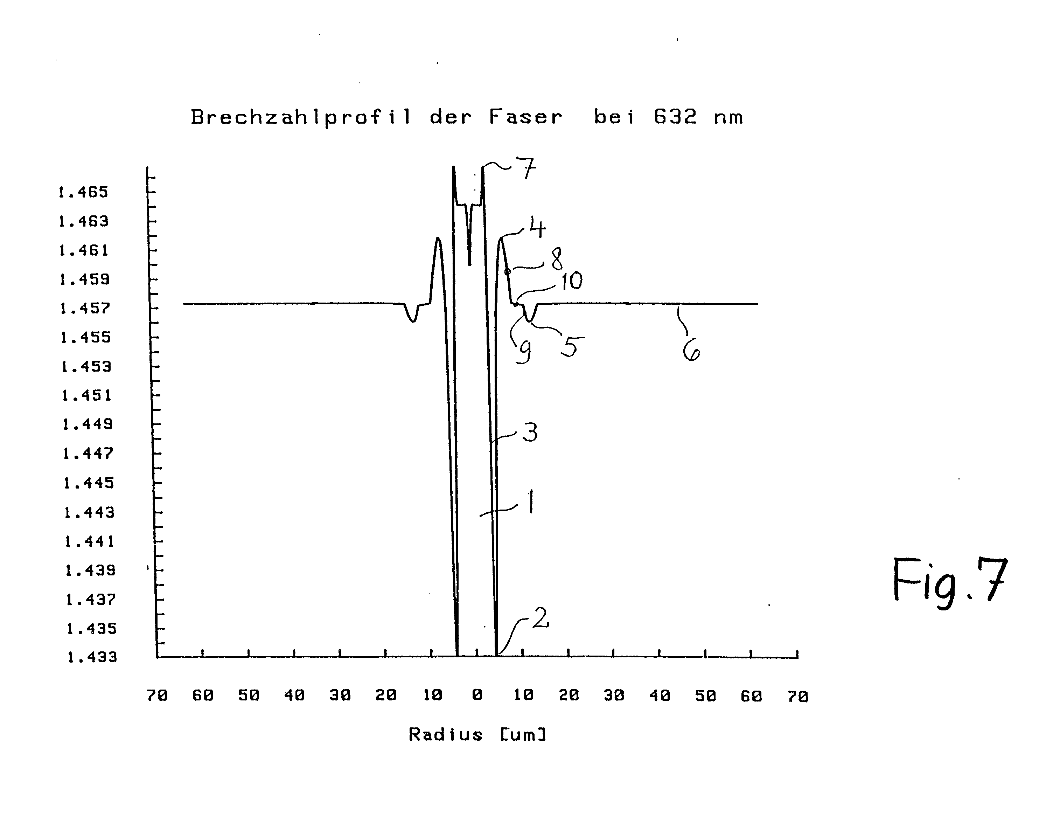

Man erhält gem. Fig. 7 ein Brechzahlprofil nach Art desjenigen einer Vielschichtfaser. Das Profil weist längs des Radius eine charakteristische Folge fast dreieckiger Hebungen und Senkungen des Brechzahlniveaus mit dazwischen liegenden flachen Zonen auf, wobei sich bekannte Grobstrukturen, nämlich ein auf den Kern 1 relativ hoher Brechzahl folgendes erstes, stark ausgeprägtes Brechzahlminimum 2, ein darauf folgendes ausgeprägtes erstes Brechzahlmaximum 4, ein schwaches zweites Minimum 5 und ein Auslaufbereich 6 wiederfinden (EP-OS 0 224 282).

Im Vergleich zu bekannten Brechzahlprofilen, z.B. nach der schon erwähnten EP-OS 0 224 282, liegen wesentliche Veränderungen vor:

Bei einfachen Fasern, d.h. solchen mit einer einzigen Stufe im Brechzahlprofil, kann die einzige Nullstelle der chromatischen Dispersion noch unterhalb 1.300 nm liegen. Bei bekannten TC (Triple-Clad) und QC (Quadrupel-Clad)-Strukturen wird durch zusätzliche Brechzahlstufen der Verlauf der chromatischen Dispersion im langwelligen Bereich nach unten gebogen, so daß man zwei Nullstellen der chromatischen Dispersion erhält, wobei die erste Nullstelle im Vergleich zur einfachen Faser auf einen Wert oberhalb 1.300 nm verschoben ist. Wenn man die erste Nullstelle bei 1.300 nm haben möchte, muß also die chromatische Dispersion bei 1.300 nm auf Null angehoben werden. Dies ist bei der erfindungsgemäßen Faser erreicht, und zwar dadurch, daß am Außenrand des Kerns 1 ein zweites Maximum 7 der Brechzahl vorgesehen ist, das durch die steil ausgeführte Abstiegsflanke 3 mit dem ersten Minimum 2 verbunden ist. Im Kern steigt die Brechzahl zu dem zweiten maximum 7 hin in einer konkaven Kurve an.

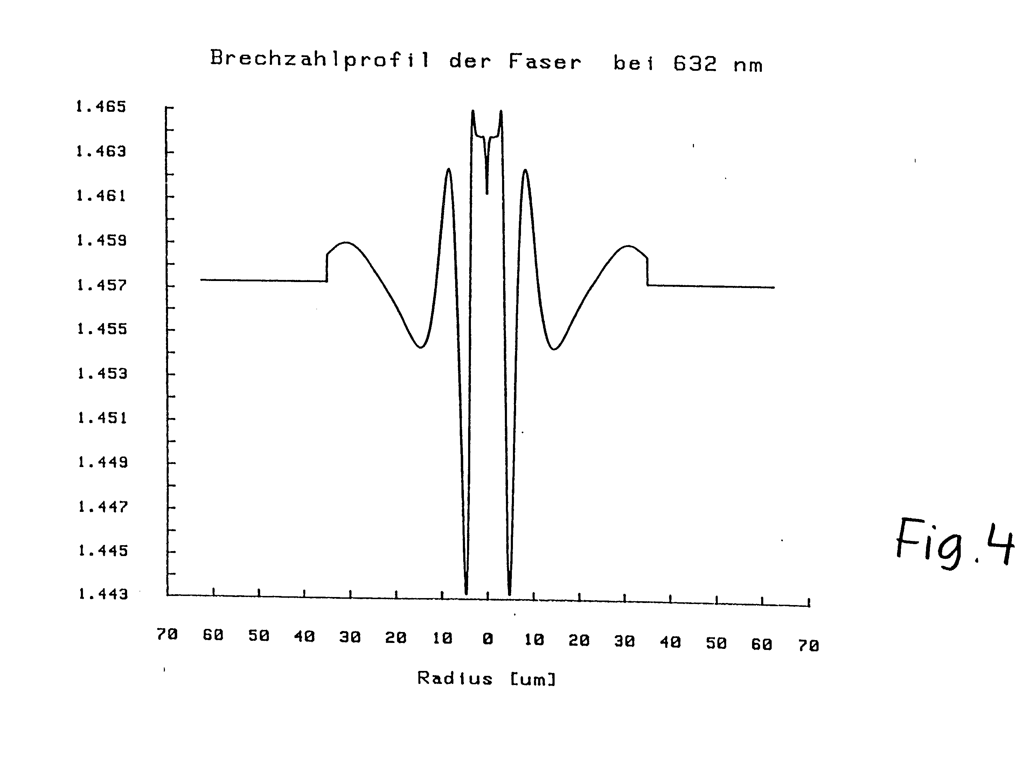

Weiterhin kann der in Fig. 4 allmähliche Abfall der Brechzahl vom ersten Brechzahlmaximum 4 zu dem zweiten Brechzahlminimum 5 wirtschaftlicher gestaltet werden, wenn man ihn stufenförmig vornimmt und dabei eine Stufe auf dem Niveau des Matrixmaterials hält. Es werden also mehrere Wendepunkte, z.B. 8, 9, 10, dort vorgesehen.

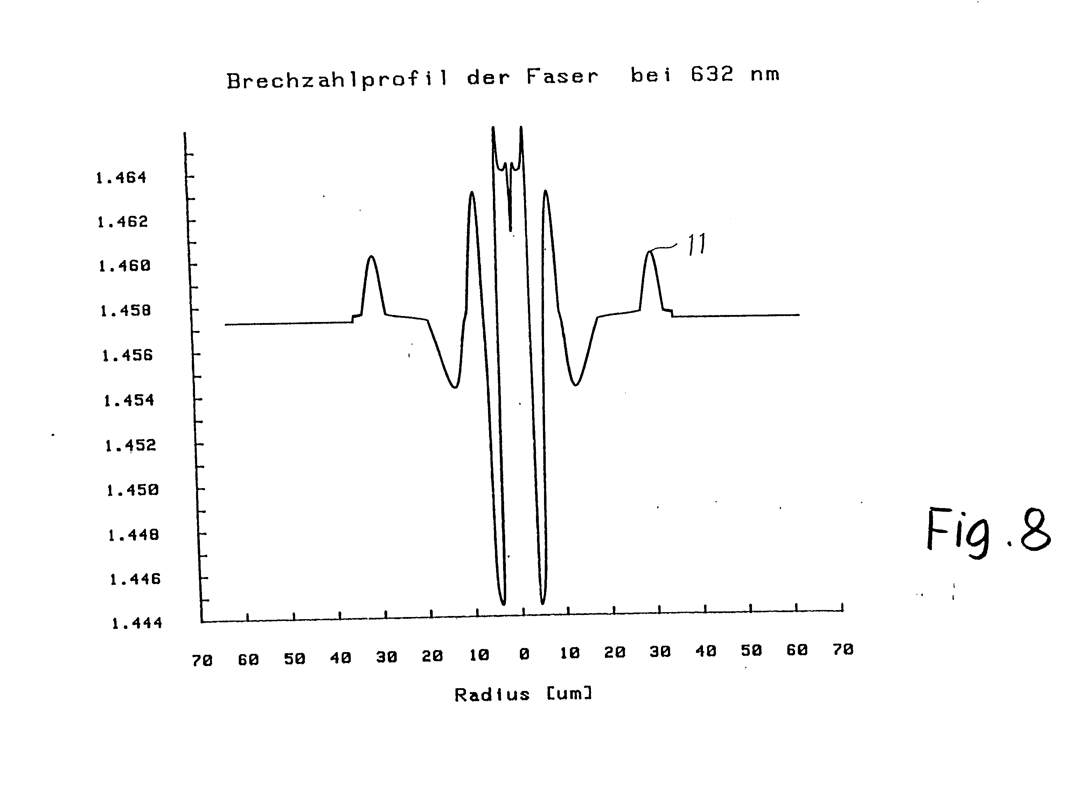

Wie Fig. 7 zeigt, liegt das erste Brechzahlminimum 2 verhältnismäßig tief. Dies kann technische Schwierigkeiten bereiten. Es ist deshalb meist zweckmäßig, in den Rechengang als gewünschte Eigenschaft einen nicht zu unterschreitenden Tiefstwert der Brechzahl einzuführen. Dies kann in der Rechnung dadurch berücksichtigt werden, daß man in die oben angeführte Norm untere Brechzahlbarrieren nach Art von "penalty"-Funktionen einführt. Die Rechnung liefert dann im Ergebnis ein natürliches Brechzahlprofil, das im Auslaufbereich 6 ein drittes Brechzahlmaximum 11 hat. Ein derartiges Brechzahlprofil ist in Fig. 8 dargestellt. Das dritte Maximum 11 bewirkt eine Erhöhung der Tunnelwahrscheinlichkeit für die $LP_{11}$-Photonen aus der Kernzone in das die Faser umgebende Material und damit eine günstige Beeinflussung des Obermodencutoffs, d.h. eine Erhöhung der Obermodendämpfung.

So werden Felddurchmesser möglich, die so breite Kernstrukturen verlangen, daß normalerweise der effektive Obermodencutoff über 1.300 nm hinaus nach oben verschoben würde. Das dritte Maximum 11 liegt so weit außen, daß es den Grundmode (d.h. dessen Dämpfung und Dispersion) nicht mehr stört. Das dritte Maximum hatte sich auch bei dem Rechengang ohne Festlegung eines Brechzahl-Tiefstwertes schon frühzeitig eingestellt, wie aus Fig. 4 zu ersehen ist. Es war aber auf dem Weg längs des projizierten Gradienten wieder verschwunden.

Die vorliegende Erfindung wurde im Rahmen einer Promotionsarbeit an der Johannes-Gutenberg-Universität Mainz, Fachbereich Physik, gemacht.

**Ansprüche**

1. Monomode-Lichtleitfaser mit einem Brechzahlprofil n (r), wobei n die Brechzahl des Fasermaterials im Abstand r von der Achse der Faser bedeutet, wobei das Brechzahlprofil durch Dotieren eines Matrixmaterials, aus dem die Faser überwiegend besteht, mit wenigstens einem Dotiermaterial unter Ausbildung einer Anzahl von Schichten mit unterschiedlicher Brechzahl eingestellt ist, dadurch gekennzeichnet,
- daß das Brechzahlprofil n (r) zumindest für die vorgegebenen Werte der chromatischen Dispersion und/oder des Felddurchmessers und/oder der Dämpfung und/oder des Obermodencutoffs als gewünschte Eigenschaften eingestellt ist,
- daß die Anzahl m der Schichten der Dicke Δ r deutlich größer ist als die Anzahl gewünschter Eigenschaften und
- daß jede Schicht gerade soviel Dotiermaterial enthält, daß die dazugehörigen Brechzahlen unter Beibehaltung der gewünschten Eigenschaften wenigstens annähernd die Bedingung

$$\sum_{i=1}^{m} |n(r_i) - n_o| \cdot r_i \cdot \Delta r = Minimum$$

erfüllen, wobei $n_o$ die Brechzahl des Matrixmaterials und $r_i = i \cdot \Delta r$ bedeuten.

2. Monomode-Lichtleitfaser nach Anspruch 1, dadurch gekennzeichnet, daß das Matrixmaterial Glas oder Quarzglas ist.

3. Monomode-Lichtleitfaser nach Anspruch 1 und 2, dadurch gekennzeichnet, daß die Anzahl m der Schichten größer 100 ist.

4. Monomode-Lichtleitfaser nach Anspruch 3, dadurch gekennzeichnet, daß die Anzahl m der Schichten zwischen 300 und 500 liegt.

5. Monomode-Lichtleitfaser nach einem der Ansprüche 1 bis 4, dadurch gekennzeichnet, daß als Dotiermaterialien ein die Brechzahl erhöhendes und ein die Brechzahl erniedrigendes Dotiermaterial vorliegen.

6. Monomode-Lichtleitfaser nach Anspruch 1 bis 5, dadurch gekennzeichnet, daß als Dotiermaterialien Fluor und Germanium vorliegen.

7. Monomode-Lichtleitfaser nach einem der vorhergehenden Ansprüche, dadurch gekennzeichnet, daß sie als gewünschte Eigenschaft einen abgeflachten Verlauf der chromatischen Dispersion in Abhängigkeit von der Lichtwellenlänge aufweist.

8. Monomode-Lichtleitfaser nach Anspruch 7, dadurch gekennzeichnet, daß die chromatische dispersion Nullstellen bei den Lichtwellenlängen 1.300 und 1.550 nm und in der Mitte dazwischen ein Maximum von 3 ps/(nm·km) hat.

9. Monomode-Lichtleitfaser nach einem der vorhergehenden Ansprüche, dadurch gekennzeichnet, daß als gewünschte Eigenschaft die Dämpfung des als ersten Obermode angenommenen $LP_{11}$-Modes bei 1.250 nm wenigstens 1 dB/m beträgt.

10. Monomode-Lichtleitfaser nach einem der vorhergehenden Ansprüche, dadurch gekennzeichnet, daß als gewünschte Eigenschaft einen die Dämpfung des Grundmodes ($LP_{01}$) bei 1.600 nm höchstens $10^{-6}$ dB/km beträgt.

11. Monomode-Lichtleitfaser nach einem der vorhergehenden Ansprüche, dadurch gekennzeichnet, daß als gewünschte Eigenschaft der Felddurchmesserbei 1.300 nm groß ist.

12. Monomode-Lichtleitfaser nach einem der vorhergehenden Ansprüche, dadurch gekennzeichnet, daß als gewünschte Eigenschaft die Brechzahl einen Tiefstwert nicht unterschreitet.

13. Monomode-Lichtleitfaser nach einem der Ansprüche 1 bis 12, mit einem Brechzahlprofil, das eine Kernzone (1) verhältnismäßig hoher Brechzahl und nach außen daran anschließend ein stark ausgeprägtes erstes Minimum (2), ein etwa bis in den Brechzahlbereich der Kernzone reichendes ausgeprägtes erstes Maximum (4), ein schwaches zweites Minimum (5) und einen auf dem Niveau undotierten Matrixmaterials liegenden Auslaufbereich (6) aufweist, dadurch gekennzeichnet, daß an dem Außenrand der Kernzone (1) ein zweites Maximum (7) vorliegt, das entsprechend einer gewünschten Anhebung der chromatischen Dispersion bei 1.300 nm auf Null bemessen ist, und daß zwischen dem ersten Maximum (4) und dem zweiten Minimum (5) mehrere Wendepunkte (8, 9, 10) vorliegen.

14. Monomode-Lichtleitfaser nach Anspruch 13, dadurch gekennzeichnet, daß zwischen dem ersten Maximum (7) und dem zweiten Minimum (5) eine Stufe auf dem Niveau undotierten Matrixmaterials vorliegt.

15. Monomode-Lichtleitfaser nach Anspruch 13 oder 14, dadurch gekennzeichnet, daß in dem Auslaufbereich (6) ein drittes Maximum (11) vorliegt.

16. Verfahren zum Herstellen einer Monomode-Lichtleitfaser, bei dem die Faser unter schichtweiser Veränderung der Brechzahl aufgebaut wird, wobei die Brechzahl durch Dotieren eines Matrixmaterials, aus dem die Faser überwiegend besteht, mit wenigstens einem Dotiermaterial eingestellt wird, dadurch gekennzeichnet,
- daß das Brechzahlprofil n (r) zumindest für vorgegebene Werte der chromatischen Dispersion und/oder des Felddurchmessers und/oder der Dämpfung und/oder des Obermodencutoffs als gewünschte Eigenschaften eingestellt wird,
- daß die Anzahl m der Schichten der Dicke $\Delta$ r groß gegen die Anzahl der gewünschten Eigenschaften gewählt wird,
- daß jede Schicht nur mit soviel Dotierungsmaterial versehen wird, daß die dazugehörigen Brechzahlen unter Beibehaltung der gewünschten Eigenschaften wenigstens annähernd die Bedingung

$$\sum_{i=1}^{m} |n(r_i) - n_0| \cdot r_i \cdot \Delta r = \text{Minimum}$$

erfüllen, wobei $n_0$ die Brechzahl des Matrixmaterials und $r_i = i \cdot \Delta r$ bedeuten.

17. Verfahren nach Anspruch 16, dadurch gekennzeichnet, daß mehr als 100 Schichten gewählt werden.

18. Verfahren nach Anspruch 17, dadurch gekennzeichnet, daß etwa 300 bis 500 Schichten gewählt werden.

Chromatische Dispersion der Faser

FIG.1

EP 0 341 427 A2

Brechzahlprofil der Faser bei 632 nm

EP 0 341 427 A2

Fig.2

Brechzahlprofil der Faser bei 632 nm

Radius [um]

EP 0 341 427 A2

Fig.3

Fig.4

Fig.5

Brechzahlprofil der Faser bei 632 nm

Radius [um]

EP 0 341 427 A2

Fig. 6

Brechzahlprofil der Faser bei 632 nm

Radius [um]

Fig.7

EP 0 341 427 A2

Brechzahlprofil der Faser bei 632 nm

EP 0 341 427 A2

Fig .8